# EUROPÄISCHE PATENTANMELDUNG

(11) **EP 4 741 265 A1**
(43) Veröffentlichungstag der Anmeldung: **13.05.2026**
(21) Anmeldenummer: 25000108.8
(22) Anmeldetag: 11.11.2025
(51) Int. Cl.: B62J 9/00, B62J 9/23

(54) **FAHRADTASCHENBEFESTIGUNGSSYSTEM**

(30) Priorität: 11.11.2024 DE 202024002140 U
(71) Anmelder: Ortlieb, Hartmut, 91560 Heilsbronn (DE)
(72) Erfinder: Ortlieb, Hartmut, 91560 Heilsbronn (DE)
(74) Vertreter: Dorn, Dietmar

(57) **Zusammenfassung**

Fahrradtaschenbefestigungssystem mit Fahrradtasche in Verbindung mit einem Fahrradgepäckträger, an den eine Tasche an mindestens 3 Befestigungspunkten seitlich mit einem Schnellbefestigungssystem angebracht werden kann, wobei die Tasche an zwei oberen Befestigungspunkten eingehängt wird und dann die Tasche an einem unteren Befestigungspunkt seitlich eingeschwenkt wird und dort verriegelt wird, sodass die Tasche nicht mehr nach oben entfernbar ist.

## Beschreibung

Fahrradfahren ist der umweltfreundliche Trend unserer Zeit. Auch der Gepäcktransport mit Taschen die leicht an einem Gepäckträger montiert und wieder abgenommen werden können ist seit vielen Jahren Standard. Es steigt der Bedarf nach eleganten Fahrrädern und eleganten Fahrradtaschen, wobei diese Taschen bequem tragbar sein sollen und trotzdem wasserdicht für jedes Wetter geeignet und weiterhin leicht befestigbar und wieder abnehmbar sind. Dies auch mit einer schönen Optik. Hierbei stören entweder herausstehende Befestigungselemente am Gepäckträger oder an der Tasche. Mit dem hier vorgeschlagenen Fahrradtaschen-Gepäckträgersystem sollen diese Nachteile weitestgehend eliminiert werden. Hierbei sollen die Themen Fahrradtasche und Gepäckträger gemeinsam gedacht werden. Es ist wichtig, dass eine Fahrradtasche eine Versteifungsschiene und/oder eine Versteifungsplatte die mit den Befestigungselementen stabil verbunden sind besitzt, damit diese nicht in das Laufrad schwingen kann. Vorzugsweise wird die Fahrradtasche wie schon an anderen auf dem Markt befindlichen Systemen an 3 Befestigungspunkten befestigt, wobei 2 Stück oben und 1 Stück weiter unten an der Tasche angeordnet sein sollen. Damit die Tasche durch Erschütterungen beim Fahrradfahren nicht vom Gepäckträger fällt, soll an dem unteren Befestigungspunkt ein Verriegelungselement angeordnet sein. Dieses Verriegelungselement wird vorzugsweise gegen die Kraft einer Feder mit einem Betätigungselement, vorzugsweise in Form einer Zugstange geöffnet. Vorzugsweise ist das Betätigungselement mit einem Tragegriff und oder Verschlussriemen der Tasche verbunden, damit die Tasche beim Anheben am Gepäckträger entriegelt wird. Es ist auch angedacht, dass der Tragegriff mit einem Magnetverschluss mit dem Betätigungselement verbunden ist. Das Betätigungselement ist aus optischen Gründen mit einer Abdeckung aus Taschenmaterial versehen. Die Betätigungsschiene läuft in einer Versteifungssicke der Befestigungsplatte. Die Tasche hat 2 Befestigungselemente oben an der Rückseite der Tasche, die oben in die Gepäckträgertaschenstange oder an dieser befestigten Befestigungsstutzen eingehängt werden. Durch Einschwenken der Tasche an ihrem unteren Befestigungspunkt in einen Befestigungsstutzen am Gepäckträger oder einem Gepäckträgerbefestigungselement wird die Tasche vertikal fixiert. Durch das Verriegelungselement wird die Tasche gegen seitliches Ausschwenken bei Erschütterungen während der Fahrt gehindert und ist so sicher mit dem Gepäckträger verbunden. Das Gepäckträgerbefestigungselement ist vorzugsweise ein Flachprofil, das Teil der Schweißkonstruktion des Gepäckträgers ist und so als reduziertes und integriertes Element des Gepäckträgers wahrgenommen wird. Unter das Flachprofil greift der Einschwenksteg des Befestigungselementes der Tasche und das Verriegelungselement greift über das Flachprofil, durch diesen zweiteiligen Aufbau und durch das Flachprofil trägt das untere Befestigungselement wenig auf, so dass die Tasche bequem getragen werden kann, ohne dass Befestigungselemente z.B. in Form von Haken am Körper reiben würden. Wichtig ist es auch, dass die oberen Fahrradtaschenbefestigungselemente wenig auftragen. Dies wird z.B. durch Halbschalen, die über Befestigungsstutzen greifen realisiert. Jedoch tragen dann die Befestigungsstutzen am Gepäckträger auf. Eleganter ist es, wenn Klapphaken über die Gepäckträgertaschenstange gehängt werden und die Klapphaken in den Taschenkörper, vorzugsweise in Aussparungen der Befestigungsschiene eingeklappt werden können. Die Klapphaken werden mit Hakenhandhaben in die Einhakposition gebracht. Sie besitzen Rastelelemente und Weichsegmente, damit der Lack des Gepäckträgers vor Beschädigungen durch den Klapphaken geschützt wird. Idealerweise sind Rastelemente, Hakenhandhabe und Weichsegmente zumindest teilweise einstückig ausgebildet und durch Einrastmontage oder 2K-Spritzguss mit dem Klapphaken hergestellt. Wichtig ist, dass Fahrradtaschen wasserdicht sind. Hierzu werden die obere Klapphakenplatte, die Halbschalen oder die Verriegelungselementplatte mit dem Taschenköper verschweißt oder dichtend mit dem Taschenkörper verschraubt. Idealerweise wird jedes Element mit mindestens 2 horizontal angeordneten Befestigungsschrauben in einem Abstand von 28mm -50 mm befestigt. Es hat sich herausgestellt, dass es immer wieder besondere Situationen für das Anbringen der Tasche bei Fahrradtaschenbefestigungssystemen gibt, deswegen wird hier die Austauschbarkeit der verschiedenen Elemente mit einheitlichem Befestigungslochabstand vorgeschlagen.

Im Folgenden wird die Erfindung anhand von Zeichnungen mit der Beschreibung näher erläutert, dabei zeigen:

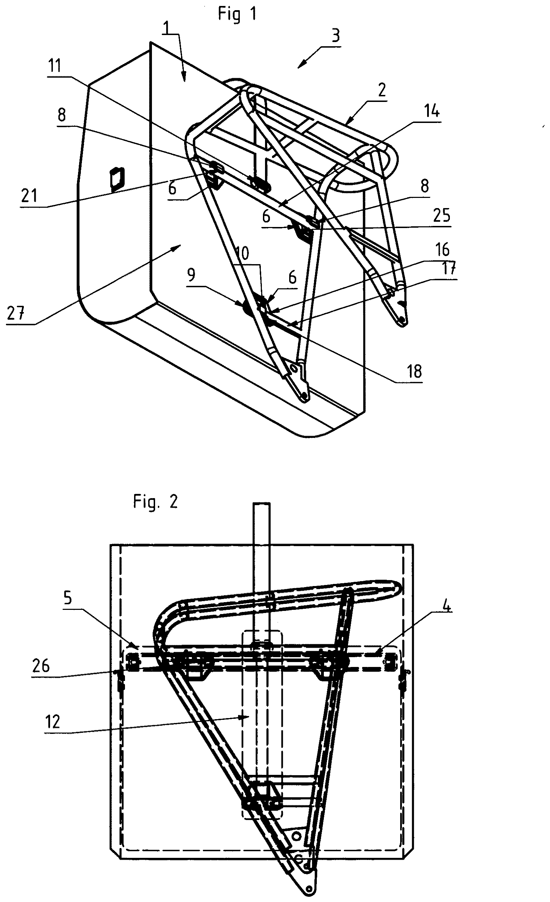

Fig.1 eine perspektivische Darstellung eines Fahrradgepäckträgersystems 3 an einem Gepäckträger 2 und einer an der Gepäckträgertaschenstange 14 eingehängte Fahrradtasche 1. Die zwei Befestigungspunkte 8 oben und der Befestigungspunkt 9 unten und das Gepäckträgerbefestigungselement 16. Das Betätigungselement 11 oberhalb der Gepäckträgertaschenstange 14.

Fig.2 eine seitliche Darstellung eines Fahrradgepäckträgersystems 3 mit verdeckten Kanten mit der Positionierung der Versteifungsplatte 5 und der Versteifungsschiene 4. Die Abdeckung 12 aus Taschenmaterial für das Betätigungselement 11.

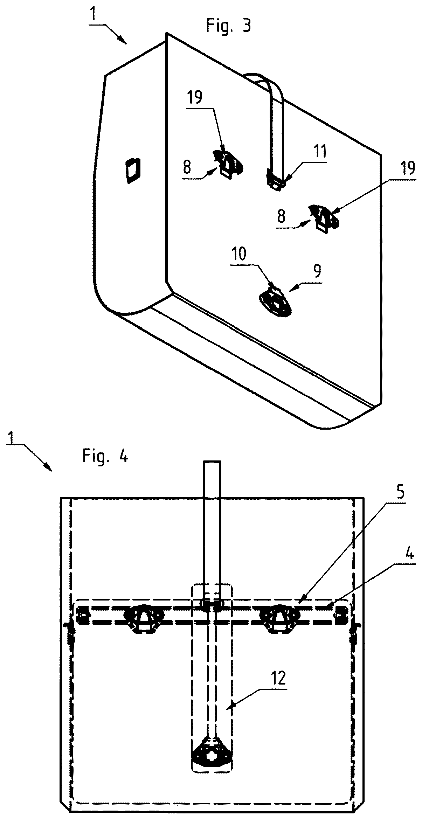

Fig.3 eine Fahrradtasche 1 mit zwei Halbschalen 19 als Fahrradtaschenbefestigungselement 6 oben zum Einhängen in Befestigungsstutzen am Gepäckträger. Zwei und ein Gepäckträgerbefestigungselement 16 und zum Einschwenken in einen Befestigungsstutzen unten zur Verriegelung mit einem Rastelement.
Fig.4 eine seitliche Darstellung einer Fahrradtasche mit verdeckten Kanten mit Versteifungsschiene und Versteifungsplatte mit einer Abdeckung aus Fahrradtaschenmaterial zur Abdeckung des Betätigungselements.

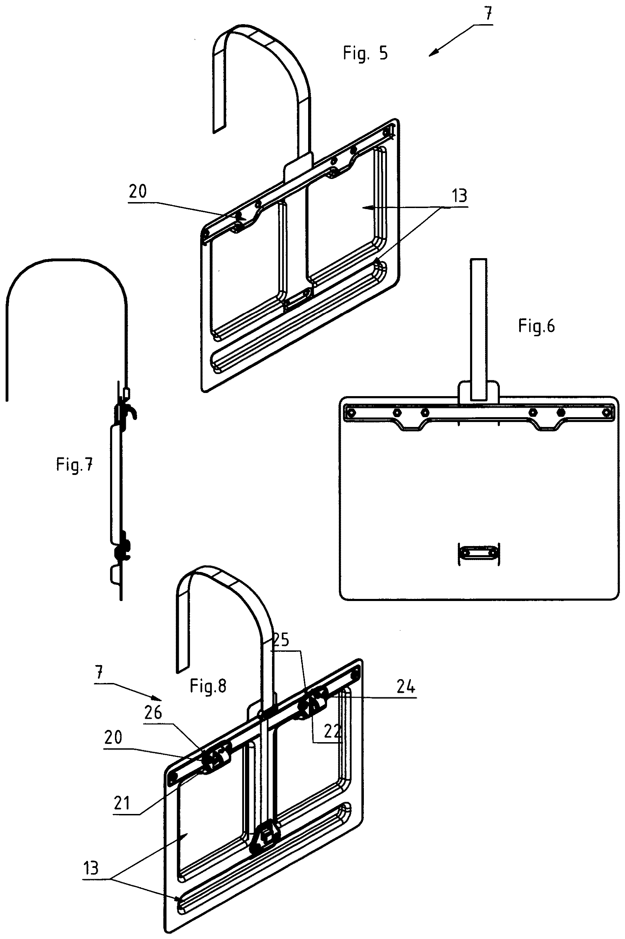

Fig.5 eine perspektivische Darstellung von Elementen des Fahrradtaschenbefestigungssystem mit der Darstellung der Aussparungen 20 in der Versteifungsschiene 4 für den Klapphaken 21 und Versteifungssicken 13 in der Versteifungsplatte 5.
Fig.6. Seitenansicht der Fig 5.
Fig. 7 wie Fig 6 von vorne mit dem oberen Befestigungspunkt 8 mit Klapphaken 21.
Fig. 8 Elemente des Fahrradtaschenbefestigungssystems mit Klapphakenbefestigungsplatten 25 mit Hakenhandhabe 24 und Rastelementen 22 für den Klapphaken 21. Die Versteifungsplatte mit Versteifungssicken. Die Aussparungen 20 in der Befestigungsschiene .

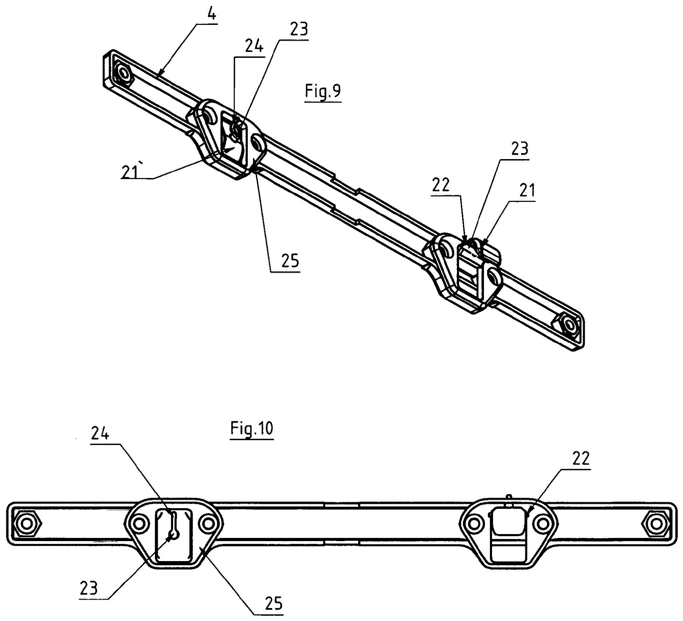

Fig.9 eine perspektivische Darstellung der Versteifungsschiene 4 mit Klapphakenbefestigungsplatten 25 ohne Taschenkörper. Der Klapphaken 21 im eingeklappten Zustand und im ausgeklappten Zustand. Die Rastelemente 22 mit Hakenhandhabe 24 und Weichsegmenten 23.
Fig 10 eine Darstellung wie Fig. 9 von der Seite.

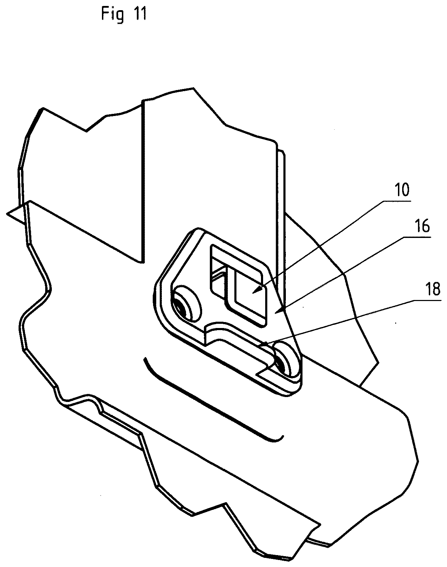

Fig. 11 eine Darstellung des Befestigungspunktes unten 9 mit Verriegelungselement 10 im leicht geöffneten Zustand und Einschwenksteg 18 des unteren Befestigungselementes der Tasche im halb geöffneten Zustand.

### Bezugszeichenliste:

1. Fahrradtasche
2. Gepäckträger
3. Fahrradtaschen-Gepäckträgersystem
4. Versteifungsschiene
5. Versteifungsplatte
6. Fahrradtaschenbefestigungselement
7. Fahrradtaschenbefestigungssystem
8. Befestigungspunkt oben
9. Befestigungspunkt unten
10. Verriegelungselement
11. Betätigungselement
12. Abdeckung aus Taschenmaterial
13.Versteifungssicke
14. Gepäckträgertaschenstange
15. Befestigungsstutzen
16.Gepäckträgerbefestigungselement unten
17. Flachprofil unten
18. Einschwenksteg des unteren Befestigungselementes der Tasche
19. Halbschalen
20. Aussparung der Befestigungsschiene
21. Klapphaken
22. Rastelemente
23.Weichsegmente
24. Hakenhandhabe
25. Klapphakenbefestigungsplatte
26.Befestigungsschrauben
27. Taschenkörper

## Patentansprüche

1. Fahrradtaschenbefestigungssystem mit Fahrradtasche in Verbindung mit einem Fahrradgepäckträger, an den eine Tasche an mindestens 3 Befestigungspunkten seitlich mit einem Schnellbefestigungssystem angebracht werden kann,
**dadurch gekennzeichnet,**
**dass** die Tasche an zwei oberen Befestigungspunkten eingehängt wird und dann die Tasche an einem unteren Befestigungspunkt seitlich eingeschwenkt wird und dort verriegelt wird, sodass die Tasche nicht mehr nach oben entfernbar ist.

2. Fahrradtaschenbefestigungssystem mit Fahrradtasche nach Anspruch 1
**dadurch gekennzeichnet,**
**dass** die Tasche an einem unteren Befestigungspunkt ein federbelastetes Verriegelungselement besitzt, mit dem die Tasche am Gepäckträger seitlich, unten eingeschwenkt und eingerastet werden kann und mittels eines Betätigungselements, wie einer Zugstange wieder lösbar ist.

3. Fahrradtaschenbefestigungssystem mit Fahrradtasche nach Anspruch 1 und 2
**dadurch gekennzeichnet,**
**dass** wenigstens ein Betätigungselement mit einem Traggriff verbunden ist.

4. Fahrradtaschenbefestigungssystem mit Fahrradtasche nach einem oder mehreren der vorherigen Ansprüche
**dadurch gekennzeichnet,**
**dass** das Betätigungselement mit einem Traggriff oder einem Verschlussriemen mittels eines Magnetverschlusses verbunden ist.

5. Fahrradtaschenbefestigungssystem mit Fahrradtasche nach Anspruch 1
**dadurch gekennzeichnet,**
**dass** die Fahrradtasche eine innere Versteifungsschiene aufweist, die mit oberen Fahrradtaschenbefestigungselementen außen verbunden sind.

6. Fahrradtaschenbefestigungssystem mit Fahrradtasche nach wenigstens einem der vorherigen Ansprüche
**dadurch gekennzeichnet,**
**dass** das Betätigungselement durch Taschengewebe wenigstens teilweise abgedeckt ist und vorzugsweise in einer Sicke der Versteifungsplatte der Tasche verläuft.

7. Fahrradtaschenbefestigungssystem mit Fahrradtasche nach wenigstens einem der vorherigen Ansprüche
**dadurch gekennzeichnet,**
**dass** die Tasche an Ihrem unteren Befestigungspunkt in ein Flachprofil oder ein Gepäckträgerrohrelement angreift und vorzugsweise keine weiteren Elemente unten am Gepäckträger für die Befestigung notwendig sind.

8. Fahrradtaschenbefestigungssystem mit Fahrradtasche nach wenigstens einem der vorherigen Ansprüche
**dadurch gekennzeichnet,**
**dass** die Tasche an Ihrem unteren Befestigungspunkt einen Einschwenksteg besitzt, der beim Einschwenken unter das Flachprofil oder ein anderes in etwa horizontal verlaufendes Gepäckträgerrohrelement positionierbar ist und/oder ein Verriegelungselement über das Flachprofil oder das horizontalverlaufende Gepäckträgerrohrelement positioniert wird.

9. Fahrradtaschenbefestigungssystem mit Fahrradtasche nach wenigstens einem der vorherigen Ansprüche
**dadurch gekennzeichnet,**
**dass** die Tasche an Ihrem oberen Befestigungspunkten Klapphaken besitzen die vorzugsweise in Aussparungen der Versteifungsschiene weggeklappt werden können.

10. Fahrradtaschenbefestigungssystem mit Fahrradtasche nach wenigstens einem der vorherigen Ansprüche
**dadurch gekennzeichnet,**
**dass** die Klapphaken Rastelemente, Hakenhandhaben und /oder Weichsegmente zum Schutz der Beschichtung des Gepäckträgerrohres besitzen und vorzugsweise diese Elemente einstückig geformt und montiert sind.

11. Fahrradtaschenbefestigungssystem mit Fahrradtasche nach wenigstens einem der vorherigen Ansprüche
**dadurch gekennzeichnet,**
**dass** die Fahrradtaschenbefestigungselemente, wie Klapphakenplatte, Halbschalen und/oder Verriegelungselementplatte mit dem Taschenkörper wasserdicht verschweißt oder verschraubt ist.

12. Fahrradtaschenbefestigungssystem mit Fahrradtasche nach wenigstens einem der vorherigen Ansprüche
**dadurch gekennzeichnet,**
**dass** die Fahrradtaschenbefestigungselemente vorzugsweise mit mindestens 2 horizontal ausgerichteten Schrauben im Abstand zwischen 28mm-50mm verschraubt sind.

13. Fahrradtaschenbefestigungssystem mit Fahrradtasche nach wenigstens einem der vorherigen Ansprüche
**dadurch gekennzeichnet,**
**dass** die Gepäckträgertaschenstange schräg am Gepäckträger angeordnet ist, so dass die Tasche vorzugsweise 10-20° nach vorne gekippt ist.

14. Fahrradtaschenbefestigungssystem mit Fahrradtasche nach wenigstens einem der vorherigen Ansprüche
**dadurch gekennzeichnet,**
**dass** die Verriegelung durch Bluetooth oder eine andere drahtlose Kommunikation betätigt wird.

15. Fahrradtaschenbefestigungssystem mit Fahrradtasche nach wenigstens einem der vorherigen Ansprüche
**dadurch gekennzeichnet,**
**dass** die Verriegelung durch Bluetooth oder eine andere drahtlose Kommunikation betätigt wird und wobei die elektrische Energie für die Betätigung des Aktors durch die Energie durch das seitliche Einschwenken der Tasche erzeugt wird und dass ein geeignetes System vorhanden ist, das diese Energie in Strom umwandelt und dass der Strom dafür gespeichert werden kann.

16. Fahrradtaschenbefestigungssystem mit Fahrradtasche nach wenigstens einem der vorherigen Ansprüche
**dadurch gekennzeichnet,**
**dass** die Fahrradtaschenbefestigungsmittel im Tragemodus der Tasche nicht weiter als 10 mm über die Fahrradtaschenrückwand hinausstehen.

17. Fahrradtaschenbefestigungssystem mit Fahrradtasche nach wenigstens einem der vorherigen Ansprüche
**dadurch gekennzeichnet,**
**dass** an den unteren und oberen Befestigungselementen die verschiedenen Befestigungselemente wie Halbschalen oder Klapphakenbefestigungsplatten austauschbar sind.
